# EUROPEAN PATENT APPLICATION

(11) **EP 3 985 604 A1**
(43) Date of publication of application: **20.04.2022**
(21) Application number: 20020576.3
(22) Date of filing: 21.01.2019
(51) Int. Cl.: G06Q 90/00, G06N 5/02, G06N 5/04

(54) **COMPUTER-IMPLEMENTED METHOD OF HANDLING LARGE QUANTITIES OF INCOMPATIBLE TYPES OF DATA SETS**

(30) Priority: 19.01.2018 DE 102018200894
(62) Divisional of application: 19704548.7
(71) Applicant: ZOE Life Technologies AG, 9100 Herisau (CH)
(72) Inventor: Schloer, Hardy Frank, 80331 München (DE)
(74) Representative: Reich, Jochen

(57) **Abstract**

The present invention is directed towards a computer-implemented method of handling large quantities of incompatible types of data sets as raw data and records in a common computing environment, which is a computer server based system.

## Description

The present invention relates to a knowledge system.

The present invention provides easy access to trusted news, data, and analytics, all filtered by relevance to your exact needs, and displayed in a highly visual way that's easy to grasp and act on. From the same intuitive desktop or mobile device, the user can instantly connect to new and emerging markets, deep and varied pools of liquidity, professional networks and expert support - anywhere, anytime. The result? Comprehensive financial analysis, through which the user will discover more opportunities and make crucial decisions with confidence.

From streaming real-time data to deep historical information, the present invention gives access to trusted, timely and accurate content from more than 400 exchanges and OTC-traded markets and over 70 direct exchange feeds, delivered via low latency data feeds. Access deep liquidity pools, with over 80 providers and more than 1,300 institutional clients, plus FX market pricing from over 2,000 contributing sources in 175 currencies.

The present invention solves decisively and fundamentally several previously unsolved ITC and AI problems by the method of claim 1.

According to the invention, the computer-implemented method of handling super large quantities of incompatible types of data sets and records in a common environment, comprises the following steps:
applying real-time analytics and multi-view information objects to these data sets and records according to a predetermined analytics model;
dynamically tracking the combined results of the real-time analytics across multiple contexts and problem domains;
in parallel updating the analytics model continuously and accurately.

The invention further comprises a computer program product comprising instructions, which, when loaded into a computer system control the computer system to perform the inventive method.

The invention further comprises an electronic signal comprising data, which, when loaded into a computer system performs the inventive method.

The invention further comprises a knowledge system adapted to perform the inventive method.

The present invention will be described in more detail in connection with the drawing. In the drawing:
- Fig. 1: illustrates the input interface system provided by the present invention;
- Fig. 2: illustrates advanced charting tools provided by the present invention;
- Fig. 3: illustrates a screen of the present invention;
- Fig. 4: illustrates the system overview of the text processing system provided by the present invention;
- Fig. 5: illustrates the application interface for indicators of the present invention;
- Fig. 6: illustrates additional screens provided by the present invention;
- Fig. 7: illustrates row data as process by the present invention;
- Fig. 8: illustrates row data elements becoming vessels of knowledge;
- Fig. 9: illustrates output of an evidence collection provided by the present invention;
- Fig. 10: illustrates the indicator extracting the actual sentiment of economic crisis from causality in relationship to commercial aviation over a defined period;
- Fig. 11: illustrates a heat-map indicator extracting the quantitative information from causality statements relating to the user defined carry;
- Fig. 12: illustrates a plot being used to visualize the answer to questions about potential decisions;
- Fig. 13: illustrates a plot with causality evidence and originating documents of a particular decision point;
- Fig. 14: illustrates a plot space used to visualize various risk scenarios side by side;
- Fig. 15: illustrates a plot space being used to visualize and understand the state of the social context and state of mind of particular group, society or region; or when confronted by a specific action;
- Fig. 16: illustrates forensic detection of complex "Event Density Clouds";
- Fig. 17: illustrates a plot being helpful for understanding artificial intelligence;

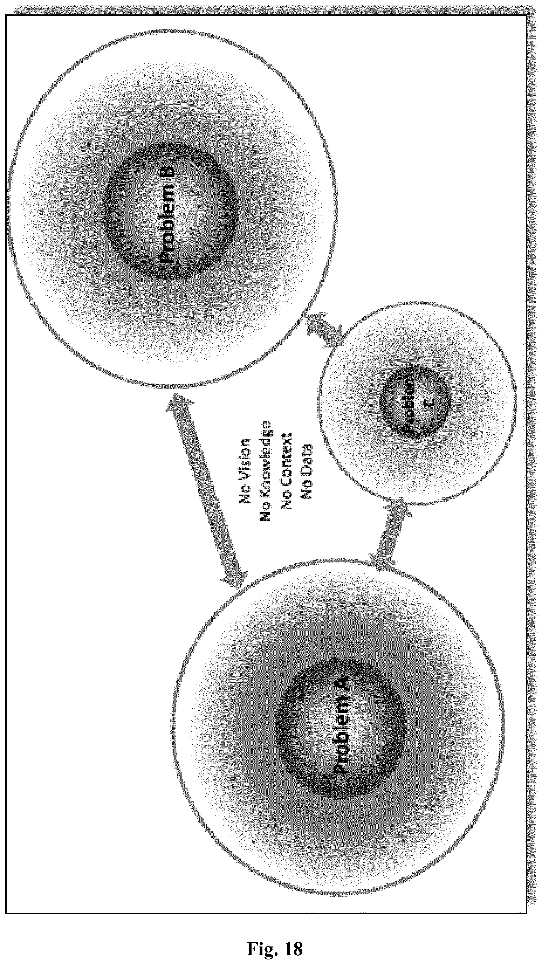

- Fig. 18: illustrates a relationship between several problems;
- Fig. 19: illustrates a relationship between subjective vision and fake or pseudo facts;
- Fig. 20: illustrates causality; and
- Fig. 21: illustrates causality elements.

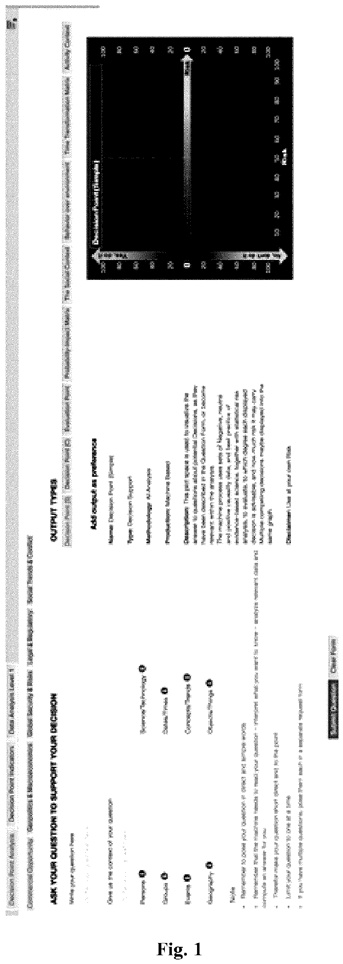

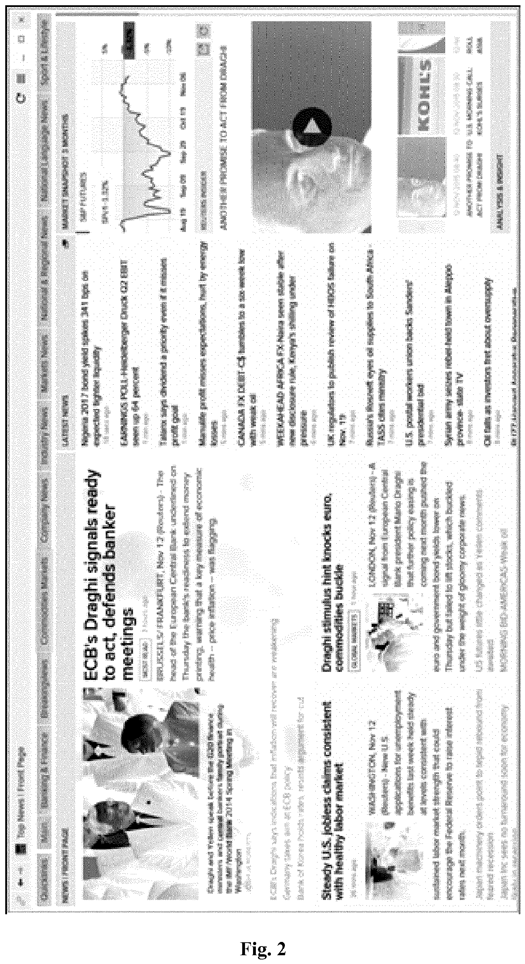

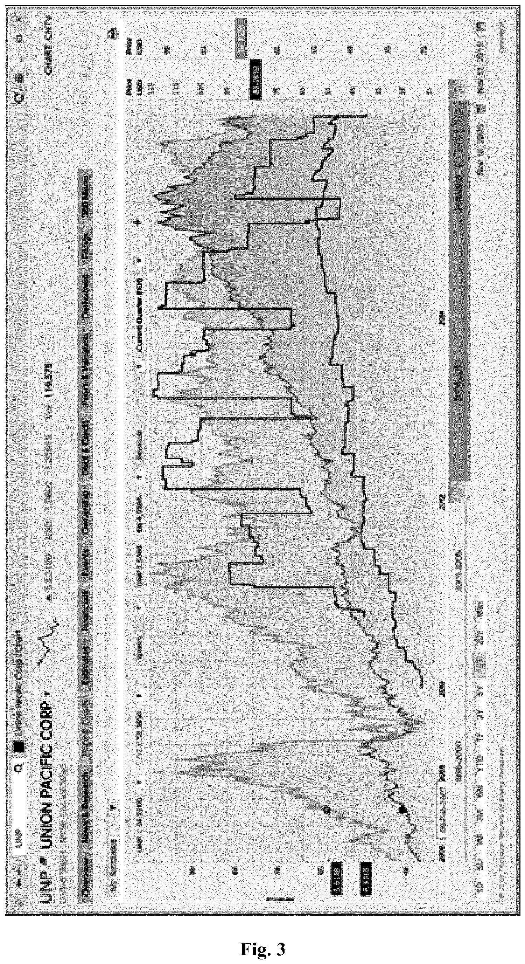

Figure 1 illustrates the input interface system provided by the present invention. Figure 2 illustrates advanced charting tools provided by the present invention. Figure 3 illustrates a screen of the present invention.

The present invention is essentially an Artificial Intelligence platform for Decision Support, set up on more than 180 separate software servers, and several hundred databases; each responsible for different functions and processes. To explain this system more logically, we can use three separate perspectives, or lenses, through which we explain this new technology:
(1) The Basics: Server and Software system with Online Service Interface, (the Systemic Features View)
(2) The unique AI software functionality, (the Software Features View), and
(3) The Philosophy, the Ontology, and the Epistemology (the Real Value Proposition View)

### (1) The Basics: Server and Software system with Online Service Interface

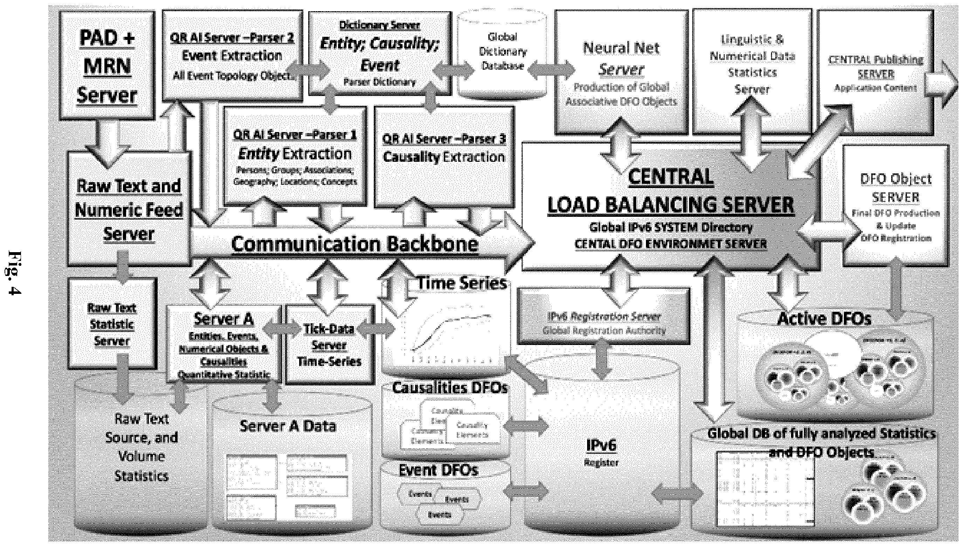

Figure 4 illustrates the system overview of the text processing system provided by the present invention. In general, the present invention is a large and complex computer server based system, which initially acquires by either 'push or pull' Technology, very large amounts of data from millions of different global sources (denoted as Data 1) in form of text, pictures, numbers, audio and video, which becomes identified, classified and categorised in many different ways, layers and competing ontologies, then transformed into quantities of custom Metadata (denoted as Data 2), to preserve all possible context, credibility and other heritage information of the data, to make it fully searchable, and identifiable to the processing servers in the most efficient way across many dimensions of subjects and views. The data is not selected of only one type or provider, but moreover and most importantly, is acquired from every faculty of knowledge, commerce, news reporting, commentary, science, public administration, and social media context.

Said 'Data 2' is processed inside a software server based online in an AI environment where it becomes the basis to develop, in real-time, answers to user initiated questions posed through a third platform (denoted as Data 3).

The delivery of the corresponding answers are facilitated on the same system, using an interactive Analytics application being also part of the present invention. Answers come in predetermined visualisations, analysed texts, graphs, and decision indicators, each giving details about a deep analysis of the posed questions and their answers.

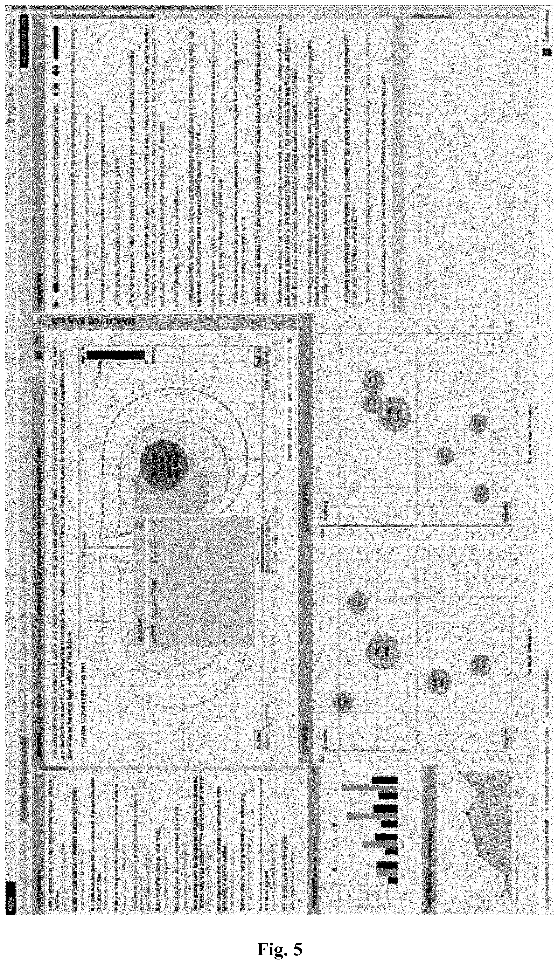

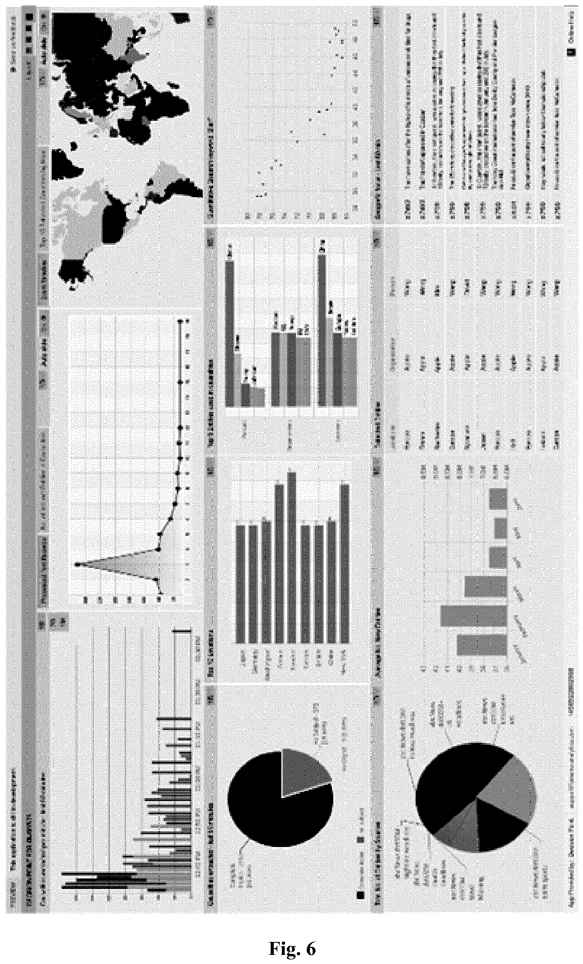

Figure 5 illustrates the application interface for indicators of the present invention. Figure 6 illustrates additional screens provided by the present invention.

### (2) The new AI software functionality

The present invention solves decisively and fundamentally several previously unsolved ITC and AI problems by the method of claim 1. Accordingly, the method of handling super large quantities of totally incompatible types of data sets and records in a common environment comprises the steps of
applying real-time analytics and multi-view information objects to these data records;
dynamically tracking the combined results across multiple contexts and problem domains;
in parallel updating the entire global analytics model continuously and accurately and throughout its n-dimensional architecture.

What has been solved by the present invention to manage the above problem properly, is to generalize the entire data and system space around a common data structure and analysis environment. Due to the fact that, in according to the present invention, every element of data (regardless of type) is addressed under the exact same structural methodology, and due to using a predetermined object structure, the Quantum Relational data fusion object (DFO) structure as the basic data management design, all interactive analytical tools have now direct and fast access to every data atom in the entire system under the exact same data identification protocol. The problem evaluation is now not only fast and effective, but extremely deep-reaching in its ability to process the so-called Butterfly Effect across as many layers of global and local contexts. We can take on extraordinary problem-solving tasks, limited only by processing power and memory we can extend to the problem-calculation at runtime. This is a major breakthrough in complex Server software architecture design. It is extraordinarily efficient and has a cost/benefit return which has never before been achieved.

The second great benefit of this efficiency uncompromised and top-to-bottom generalized design is that we can execute most extreme abstract searches and queries within our various internal and external analysed data pools. The system of the present invention can execute these most extreme searches, which can be fully integrated into the systemic context of deep research, knowledge management and context definitions - all executed through the user interface. This is a Quantum Leap beyond modern search technologies, in terms of just plain textual searches, but moreover, it is a totally new approach to knowledge element architectures and forensic context management. For example, a system-user could define a search, which could be something like:
EXAMPLE of a System Internal Search: "{Find Range} of {local/regional} {Events}, organized by {Persons} with a {Political Affiliation} of {Y} under the {Concept} of {C} which have taken place between last year, {Time/Date}: {December 12} and potentially with a {Probability} = {<80%} will take place till {Time/Date}: {July of next year} within the {Geography}= {XXI} and/or {XX2}, which involve both, the {Event}+ {Concept}= {A, C} or the {Event} {Concept}= {B}, and involving within any qualifying event also {Persons} with a history of {Concept}= {D}, but not being Members of {Group}= {G1 or G2}, and are either {Behaviour}: {Definition}={producing or marketing Products} of the range {Object}= {A, B, and G} in {markets}, which reside in the {Geography}= {subtropical regions of Africa}, or {Geography}= {Central and east Asia}, to customers with a {profile/Behaviour} = {Y1, Y2 or Y3}"*
*(to make this query example specifically interesting to the reader's specific interests, replace any of the references inside the {} symbols with any of your own choice, to experience the power potential of this technology)

To make very clear, the present invention is not aiming to become a competing Search Engine, because the ambitions of DP are much greater than just to forensically search for the proverbial needle in the haystack. However, the foregone example of a query gives a perspective of how powerful, how forensic, and how direct the overall model is and how DP can extract extremely complex knowledge objects from its data pools that have many dependencies, conditions and restrictions. Our query would not result into 10,000 unrelated links produced by common search engines, but would return only those elements of information which have exact, direct and logic relevance to the query.

The present invention is intended to help decision-makers and analysts alike to find the right and balanced approach to complex and multi-contextual problems. It was therefore also important to design new ways to transmit and explain such information to the user in a most efficient and effective way. The present invention is presenting its results through innovative visualisations which perpetually update in real-time. Below are a few examples of these visualisations, which use only minimal amounts of text to read, but still convey an extensive amount of information.

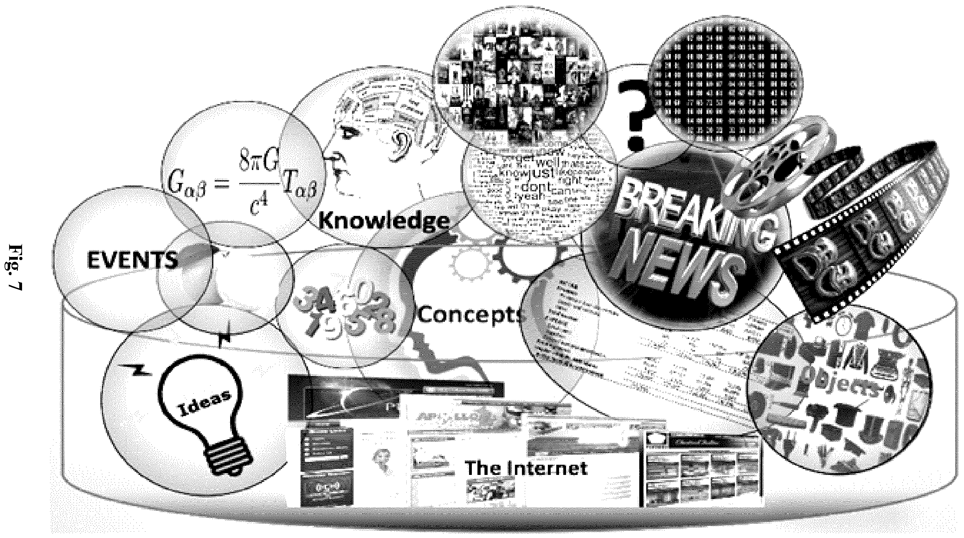

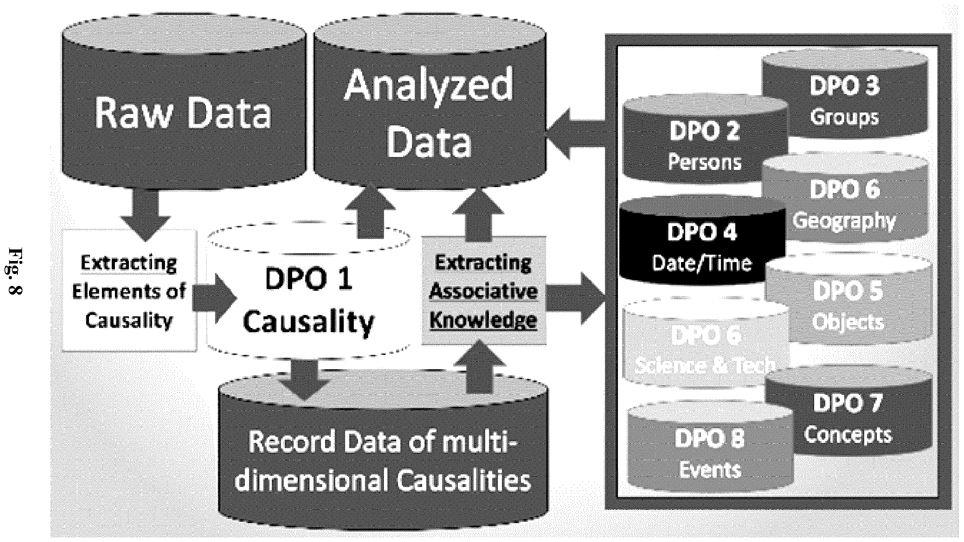

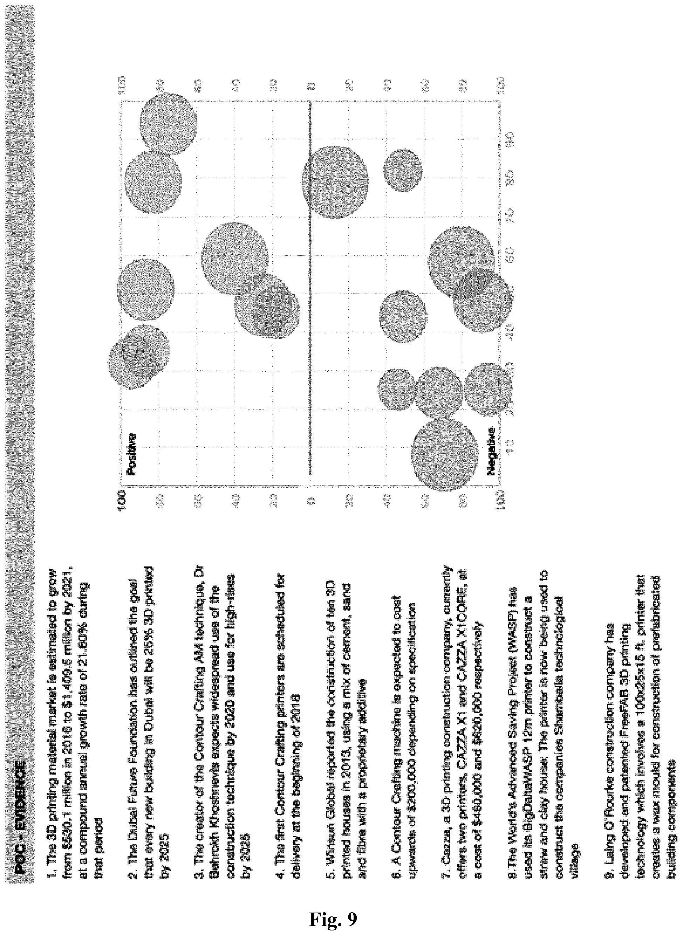

Figure 7 illustrates row data as process by the present invention. Figure 8 illustrates row data elements becoming vessels of knowledge. Figure 9 illustrates output of an evidence collection provided by the present invention.

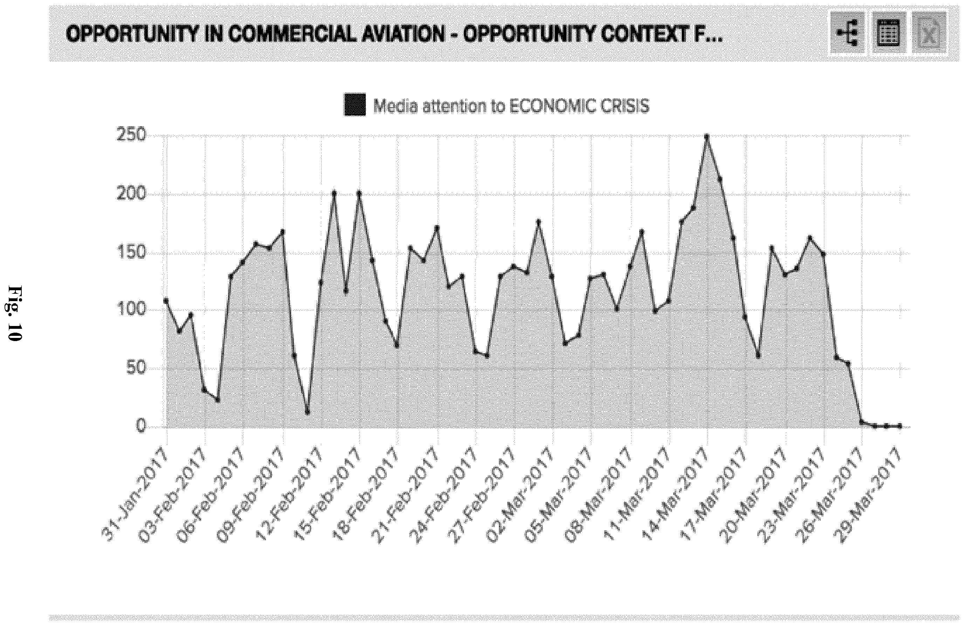

Figure 10 illustrates the indicator extracting the actual sentiment of economic crisis from causality in relationship to commercial aviation over a defined period.

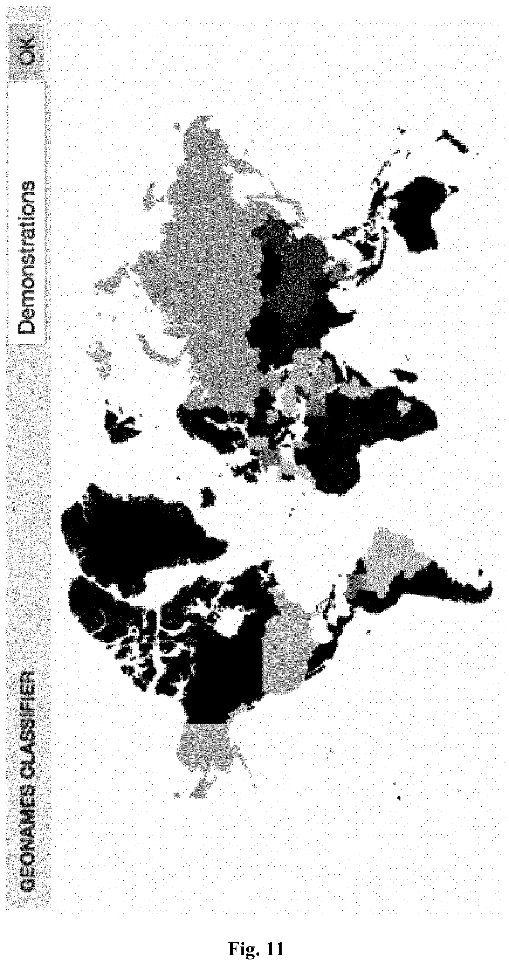

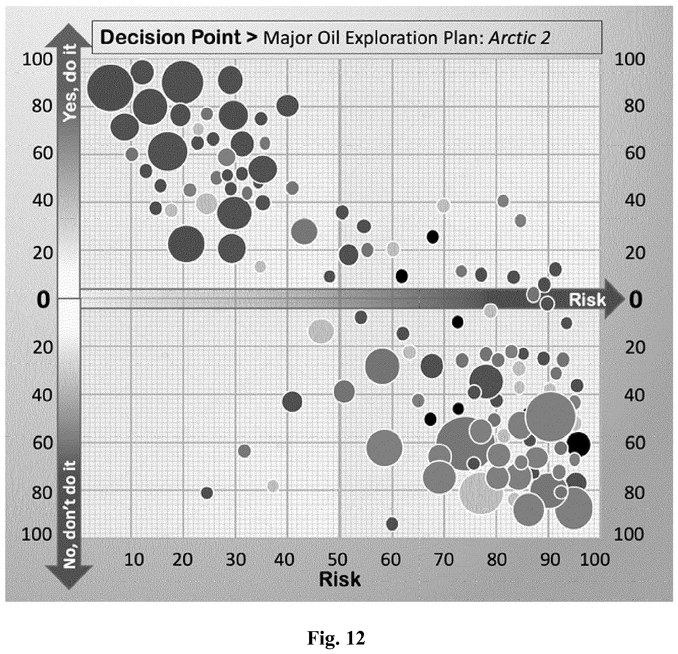

Figure 11 illustrates a heat-map indicator extracting the quantitative information from causality statements relating to the user defined carry. Figure 12 illustrates a plot being used to visualize the answer to questions about potential decisions. The following is a legend to the plot:
**Name:** Decision Point
(left: Simple; below: Complex)
**Type:** Decision Support
**Methodology:** AI Analysis
**Production:** Machine Based
**Description:** This plot space is used to visualize the answer to questions about potential Decisions, as they have been described in the Question Form, or become relevant within the analysis.

The machine process uses sets of Negative, neutral and positive causality data, and best practice of evidence-based science, together with statistical risk analysis to evaluate to which degree each displayed decision is advisable, and how much risk it may carry. Multiple competing decisions may be displayed into the same graph. **Update:** Real-Time

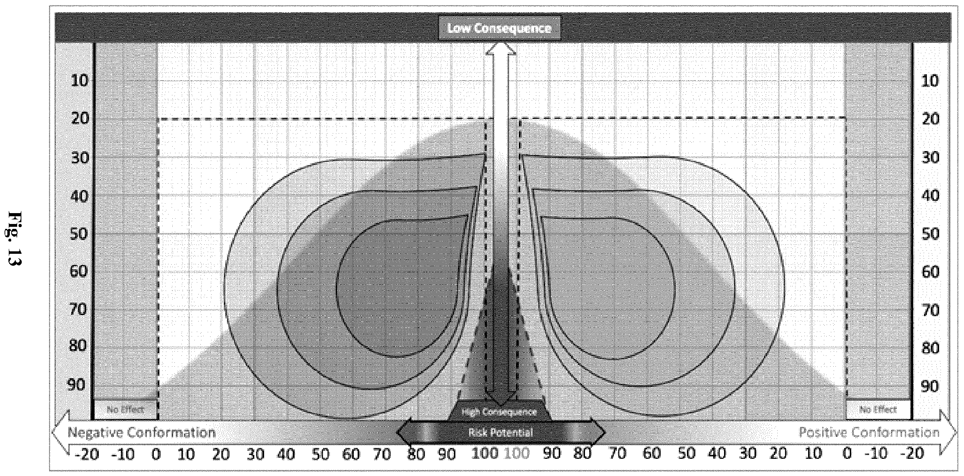

Figure 13 illustrates a plot with causality evidence and originating documents of a particular decision point.

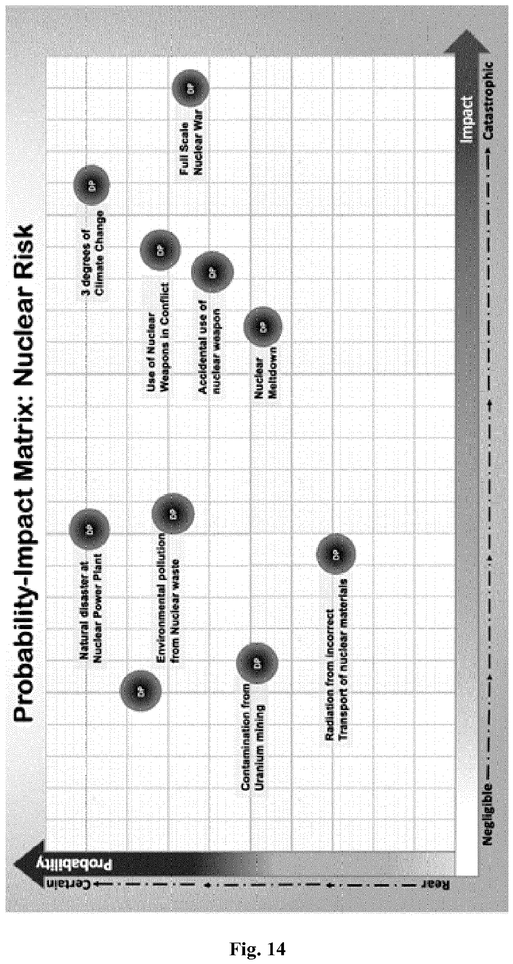

Figure 14 illustrates a plot space used to visualize various risk scenarios side by side. The following is a legend to the plot:
**Name:** Probability-Impact Matrix
**Type:** Risk Evaluation
**Methodology:** AI and Statistical Analysis
**Production:** Machine Based
**Description:** This plot space is used to visualize various risk scenarios side by side; indicate, how probable they may be, and how negatively their impact is expected to be, if they occur
The graph is useful to display various scenarios in parallel on environmental issues, conflict, financial risk, social uprising, potential accident scenarios, and similar cases.
**Update:** Hourly; Daily; Monthly.

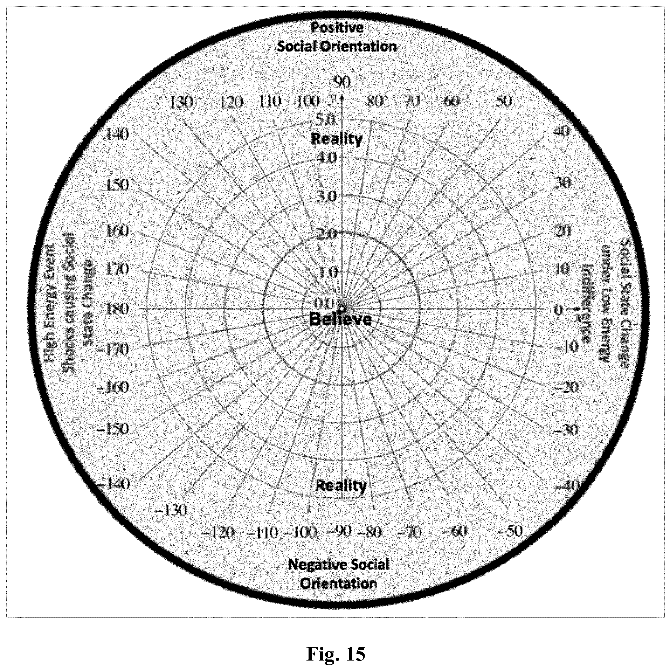

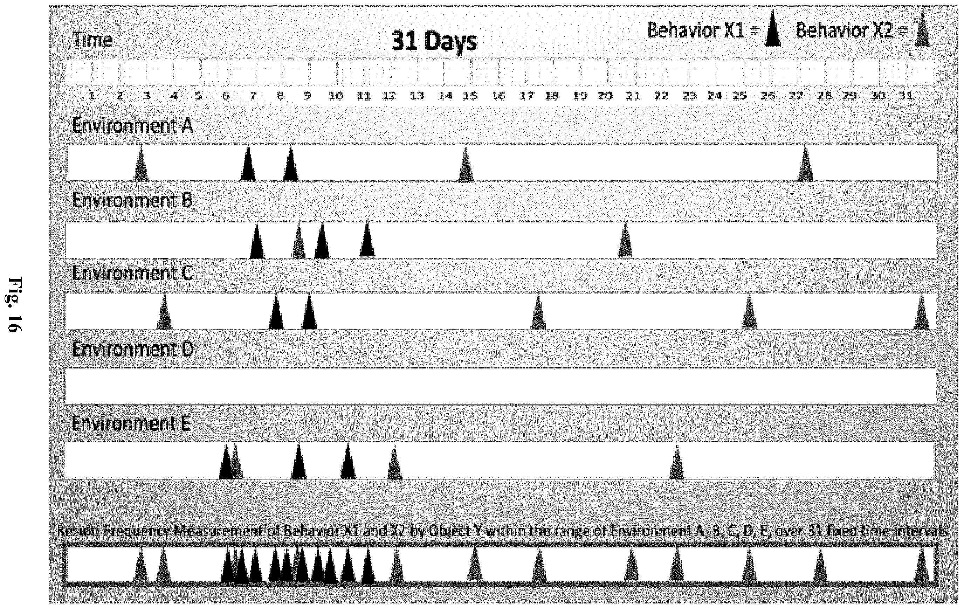

Figure 15 illustrates a plot space being used to visualize and understand the state of the social context and state of mind of particular group, society or region; or when confronted by a specific action. Figure 16 illustrates forensic detection of complex "Event Density Clouds". Legend of the plot:
**Name:** The Social Context
**Type:** Contextual Information
**Methodology:** Statistical
**Production:** Machine/Research Based
**Description:** This plot space is used to visualize and understand the state of the social context and state of mind of a particular Group, Society or Region, or when confronted by a specific action. The graph can display multiple social groups and competing undercurrents in society, in parallel. It indicates moods, states changes and states between reality and beliefs. This chart is usually filled through statistical information, but explained by a social scientist.
**Update:** Weekly.

### (3) The Philosophy, the Ontology, and the Epistemology

One important way to describe the inventive technology is by describing it from a point of information science and its important psychological and philosophical features, which remove some of the greatest barriers in understanding true reality in a much more objective way. Background details may be found in the book by Schloer/Spariosu, 'The Quantum Relations Principle', V & R unipress, Goettingen, Germany 2016. This book gives an extensive background on the philosophical and practical implications of these new technologies.

The invention starts from the bases that a human can only ever ask one of three different questions: (1) what is...? (what is the current condition, and how did we get here?) (2) what would be, if... ? (the conditional, or potential future based on my planned action X- the active question), and (3) what will be...? (the probable futures to come - the passive question). In this way, the present invention focuses strongly on the aspects of understanding reality in the first place, and how to intelligently respond in the second place. Intelligent response also requires that a person understand the true concept of intelligence and especially how we expect an intelligent machine to respond to the reality of our environment.

The first requirement is that the Machine hosted AI system can modify itself in a scaled response to external observation, external influence and externally imposed requirements.

The second requirement is that the AI system can respond to these external factors, self-initiated, and with the purpose to achieve better efficiency with respect to its own mission and purpose, with consideration of all available resources and limitations.

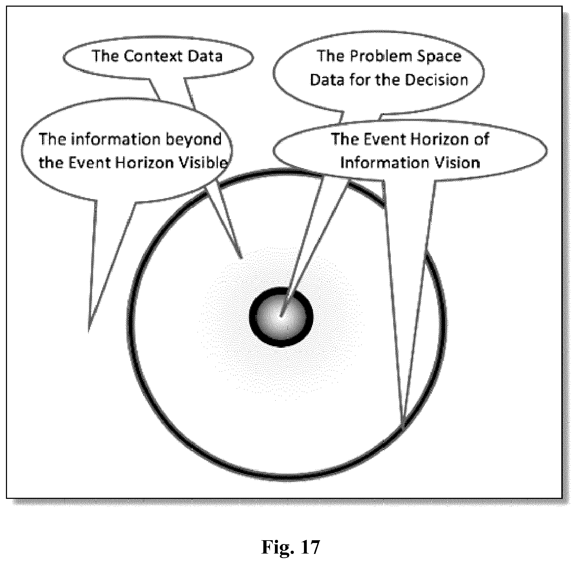

These requirements impose on our AI machine that it can detect and measure the facts, its dynamics and impacting consequences; preferably by understanding the difference between actual facts and those which are artificially induced facts, test a hypothetical scenario (solving the "what would be, if...?" question). The problem is, however, that humans tend to teach their own flaws to the machines they build. Figure 17 illustrates a plot being helpful for understanding artificial intelligence;

### The Problem of the human 'Black Hole of Information Awareness'

Our mental vision is like a Black Hole in Astronomy: There is no Information beyond the Event Horizon available to the Problem Solution. We are inside the Black Hole of Information Awareness. In the Graph above, the inner red circle represents the information of the problem, the data and the solution.

The fuzzy area around the problem space is the contextual information we know at the time of the problem solution. The blue ring around the context area is symbolic, and represents the so-called Event Horizon of the know-able information. We never know what it is we don't know. This is a major risk factor in solving problems. It gets worse: different Problems may be related, and we could learn much about them, by connecting them in a single context zone and problem-solving environment, but we will never know this, because we see our world only from Within the Problem, and only up to its Event Horizon of know-able Information.

The fact is that all of our problems and Decisions are always in some way related, even if this is not immediately apparent. The connections between them are often deeply hidden from our overly simplistic vision about our world; hidden mostly in clouds of vague information, no clear context, false assumptions, random beliefs and more undefined questions. However, modern business intelligence solutions generally don't help to solve this enigma. In fact, they make it worse by skilfully using this condition and subjectively hiding the true reality from our eyes, to produce pleasing answers to the user.

The problems in AI, which the inventive method set out to address are these:
- Big Data yes, but all solutions available on the market still limiting the scope of the data and the connected Information space...
   (we never know what important data or context we miss)
- Subjective Problem Definition...
   (very subjective and filtered approach to the near random selection of data, tools and processes)
- Biased Result Expectations...
   (the preferred, pleasing, or expected answer wins over the right answer - every time. This is dangerous.)

The systemic architecture of the present invention has made a major step in preventing these major flaws of problem analysed by humans or machines, and put in place a systemic approach which allows no answer until all spaces are connected, and all data has been fully considered. Our Solution is to build a Big-Data Problem Solving Environment, NOT a Problem solving Solution. Our most important Goal: The right and acceptable answer must emerge already within our Problem-Solving Environment, before we ask the questions! In other words, our system must know the problem space so well, that any connection of any dynamic force within the space is pre-identified - without any Bias.

### How did we achieve this?

By Creating an operative environment through removing fundamental problems and barriers in machine learning and real-time situational awareness, by creating a fully global, fully functional, and fully generalized data, instruction and self-learning operating system that retains and recalls all available data, its causalities, delivers real-time vertical, horizontal, n-dimensional analysis assets across all analytical applications; with the goal to be equally adaptable to areas of business, science, governance, security, education and general social development and interaction.

It works by creating a System, functioning consistently with the rich evaluation capabilities of the human brain, but taking in additional advantage of the seemingly endless parallel processing capabilities of the Machine together with near unlimited possibilities in memory and storage, which addresses the cardinal limitations of Human evaluation and analysis capabilities. We created shared Machine Thinking Capabilities through strict Generalization of all Data and all Process Tools throughout the system.

The ultimate goal was: to achieve the Dynamic Real-Time Understanding of all forms of Behaviour and all types of physical and abstract Objects through the same set of Lenses and Tools, which are native to both, the Human and the Machine. Therefore, the Understanding, modeling and most correct anticipation of any Behavior and Interaction of any Object, System, Technology, Ecology or Lifeform within our known Universe was and always is our highest goal, to serve as credible decision support technology

The Quantum Relations Machine is built and arranged effectively around Causality.

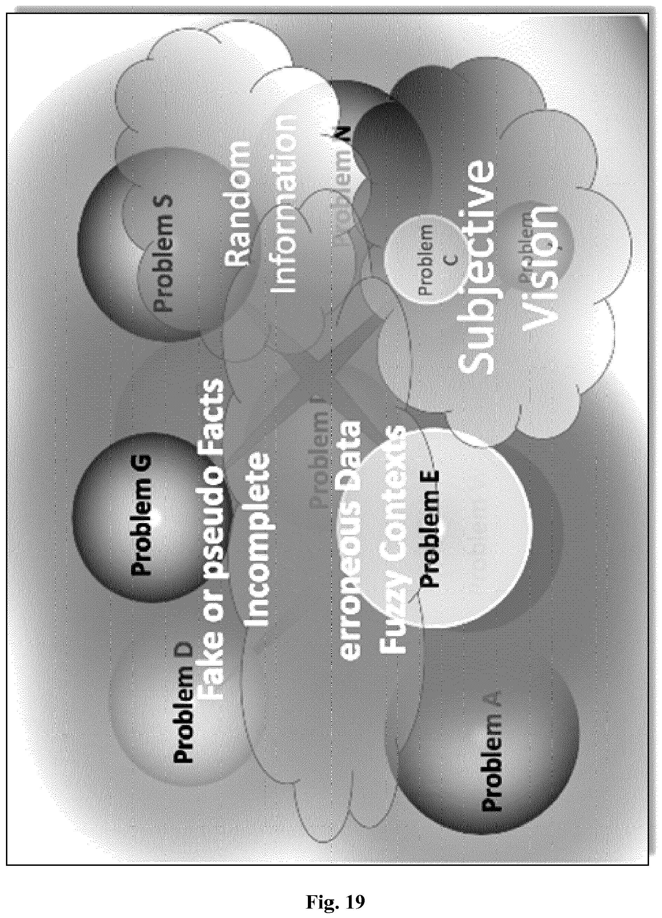

Fig. 19 illustrates a relationship between subjective vision and fake or pseudo facts.

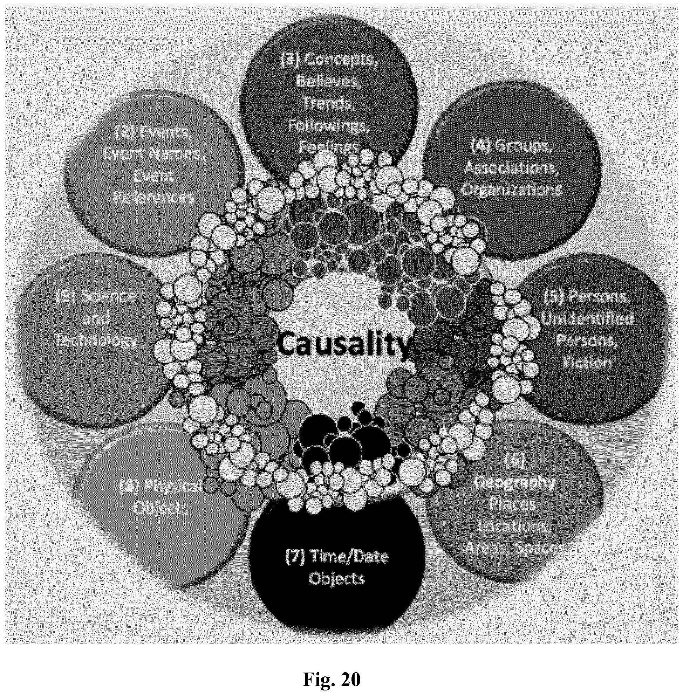

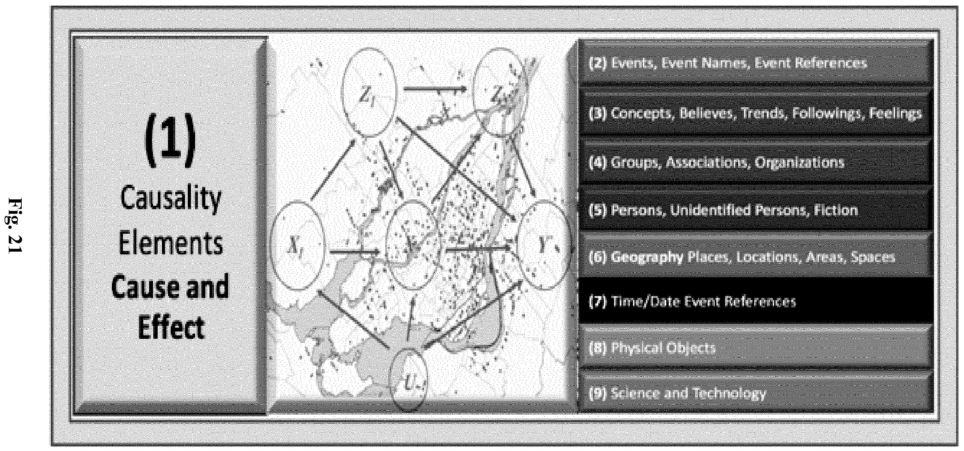

Fig. 20 illustrates causality; and Fig. 21 illustrates causality elements.

The Extraction of Causality from Data is the single most important and most rewarding task in the pursuit of Intelligence. Understanding Causality builds the logic prime feature of all knowledge.

Causality is the relational link between an event and a second event, where the second event is understood as consequence of the first. In common logic, Causality is also the relation between a set of factors and some phenomena. Causality is a prime feature to knowledge and cannot be substituted. It is therefore the prime element of the QRM

Understanding the very nature of Causality is vital. Causality (also referred to as causation, or cause and effect) is the natural or worldly agency or efficacy that connects one process (the cause) with another process or state (the effect), where the first is partly or fully responsible for the second, and the second is partly or fully dependent on the first. In general, a process has many causes, which are said to be causal factors for it, and all lie in its past. An effect can in turn be a cause of, or causal factor for, many other effects, which all lie in its future. Causality is metaphysically prior to notions of time and space. Causality is an abstraction that indicates how the world progresses. Causality is implicit in the logic and structure of ordinary language. Most importantly, Causality is the lead analysis feature of all processes in our analytics processes and systemic functions.

### The Prime Elements of the present invention

Anything that occurs or exists in physical shape or as concept, can be understood in the QRM through the lenses of the Prime Elements. A prime Element is many things at once. It is first of all a category, but also a window into reality and an organizing concept of input/output to the world we live in. Initially, the element of Causality is the first lens of discovery into Events\Concepts, Groups and Organizations; individual Persons; any Location or Geographical entity; any range of time; Physical Objects, or elements of Science and Technology. The Primary Object View is to understand and record all action of our Universe and all its physical and abstract content. It is the ontology, epistemology and view of organization of everything we know about the Universe, or ever will know.

## Claims

1. A computer-implemented method of handling large quantities of incompatible types of data sets as raw data and records in a common computing environment, which is a computer server based system, comprising the following steps:
- applying real-time analytics and information objects to these data sets and records according to a predetermined analytics model, the analytics model comprising artificial intelligence techniques, thereby extracting elements of causality to be stored in a database;
- extracting associative knowledge from the stored elements of causality between objects of predefined type;
- dynamically tracking the combined results of the real-time analytics across multiple contexts and problem domains defined by metadata;
- in parallel updating the analytics model continuously and accurately according to a predefined time interval.

2. The method according to claim 1, **characterized in that** causality forms the relational link between an event and a second event, wherein the second event is understood as consequence of the first.

3. The method according to claim 1 or 2, **characterized in that** objects are predefined according to at least one of the type of Events, Concepts, Groups, Persons, Geography, Time, Physical Objects, and/ or elements of Science and Technology.

4. The method according to any one of the preceding claims, **characterized in that** the predetermined analytics model comprises statistical analysis or statistical risk analysis.

5. A computer program product comprising instructions, which, when loaded into a computer system control the computer system to perform the method of any one of claims 1 to 4.

6. A computer server based system of handling large quantities of incompatible types of data sets as raw data and records in a common computing environment, which is a computer server based system, the system being arranged to:
- apply real-time analytics and information objects to these data sets and records according to a predetermined analytics model, the analytics model comprising artificial intelligence techniques, thereby extract elements of causality to be stored in a database;
- extract associative knowledge from the stored elements of causality between objects of predefined type;
- dynamically track the combined results of the real-time analytics across multiple contexts and problem domains defined by metadata;
- in parallel update the analytics model continuously and accurately according to a predefined time interval.
